# EUROPEAN PATENT SPECIFICATION

(11) **EP 1 278 087 B1**
(45) Date of publication and mention of the grant of the patent: **14.06.2006**
(21) Application number: 02008762.3
(22) Date of filing: 18.04.2002
(51) Int. Cl.: G02B 6/42, H04B 10/148

(54) **Polarization diversity receiver with planar waveguide and polarizing beam splitter**
Mehrfachempfänger für verschiedene Polarisationen mit planaren Wellenleitern und plolarisierendem Strahlteiler
Recepteur pour la detection d'etats de polarisation differents avec guides d'ondes planaire et séparateur de faisceaux polarisant

(30) Priority: 19.07.2001 US 909364
(43) Date of publication of application: 22.01.2003
(73) Proprietor: Agilent Technologies, Inc. (a Delaware corporation), Palo Alto, CA 94303 (US)
(72) Inventor: Tan, Tun Sein, Los Altos Hills, California 94022 (US); Baney, Douglas M., Los Altos, California 94024 (US); Newton, Steven A., Los Altos, California 94024 (US)
(74) Representative: Liesegang, Eva

(56) References cited:
- EP-A- 0 271 934
- DE-A- 4 007 595
- GB-A- 2 214 381
- US-B1- 6 256 103

## Description

### FIELD OF THE INVENTION

The invention relates generally to the field of optical measurements and measuring systems, and more particularly to a system for optical heterodyne detection of an optical signal.

### BACKGROUND OF THE INVENTION

Dense wavelength division multiplexing (DWDM) requires optical spectrum analyzers (OSAs) that have higher spectral resolution than is typically available with current OSAs. For example, grating based OSAs and autocorrelation based OSAs encounter mechanical constraints, such as constraints on beam size and the scanning of optical path lengths, which limit the degree of resolution that can be obtained. As an alternative to grating based and autocorrelation based OSAs, optical heterodyne detection systems can be utilized to monitor DWDM systems.

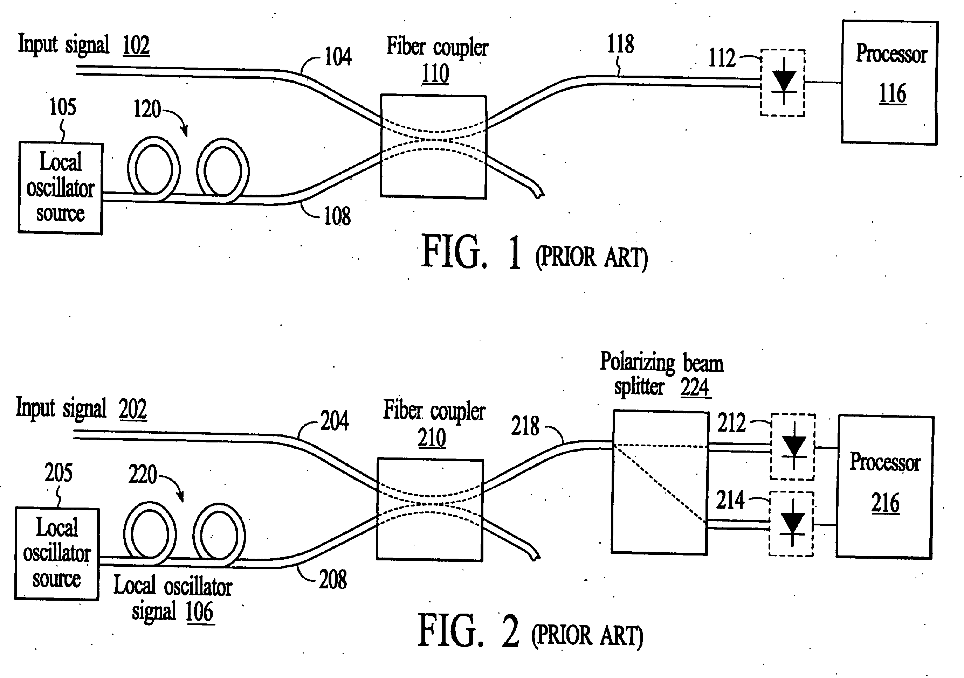

Optical heterodyne detection systems are utilized for optical spectrum analysis of an input optical signal. Fig. 1 is a depiction of a prior art heterodyne-based detection system that includes a fiber coupler 110 that combines an input signal 102 from an input fiber 104 with a swept local oscillator signal 106 from a local oscillator source 105 via a local oscillator fiber 108. The combined optical signal travels on an output fiber 118 and is detected by a receiver 112. Square law detection results in mixing of the two combined waves and produces a heterodyne beat signal at a frequency that is equal to the frequency difference between the combined waves. The receiver converts optical radiation from the combined optical signal into an electrical signal. The electrical signal is processed by a signal processor 116 to determine a characteristic of the input signal, such as frequency, wavelength, or amplitude. In order to prevent fading of the heterodyne beat signal, it is important that the polarization states of the input signal and the swept local oscillator signal are matched. One technique for matching the polarization states of the input signal and the swept local oscillator signal involves adjusting the polarization state of the swept local oscillator signal with a polarization controller 120 to track changes in the polarization state of the input signal. A disadvantage of the polarization matching technique is that a polarization tracking system is required.

A polarization diversity receiver can be incorporated into a heterodyne-based OSA to provide polarization independent signal detection. Fig. 2 is a depiction of a heterodyne-based OSA that incorporates a polarization diversity receiver. Throughout the specification, similar elements are identified by similar reference numerals. The heterodyne-based OSA includes a polarization controller 220 on the local oscillator fiber 208, a fiber coupler 210, a polarizing beam splitter 224, two receivers 212 and 214, and a processor 216. The fiber coupler is optically connected to the polarizing beam splitter by the output fiber. The polarizing beam splitter splits the combined optical signal into two orthogonally polarized beams that are separately detected by the respective receivers. The power of the local oscillator signal 206 is split equally between the receivers 212 and 214 by adjusting the polarization state of the local oscillator signal. The orthogonally polarized beams that are detected by the two receivers include an intensity noise component and the heterodyne beat signal, as is known in the field of optical heterodyne detection. The strength of the heterodyne beat signal is recovered by squaring and adding the individual signals from both receivers.

An optical system which is similar to that shown in fig. 2 of the present application is disclosed in US 6,256,103 B1 and in GB 2 214 381 A.

Although the heterodyne detection systems of Figs. 1 and 2 work well, they both utilize fiber couplers which exhibit some undesirable optical characteristics. Specifically, fiber couplers tend to introduce unstable birefringence and their output coupling ratio can vary with the wavelength or polarization state of the incoming optical signals.

As an alternative to fiber couplers, other optical heterodyne detection systems utilize polarizing beam splitters to combine the input signal with the local oscillator signal. Using a polarizing beam splitter to combine an input signal with a local oscillator signal requires precise alignment between the input signal and the local oscillator signal within the polarizing beam splitter. Specifically, the input fiber and local oscillator fiber must be precisely secured at outer faces of the polarizing beam splitter. The precise alignment required to couple two optical signals with a polarizing beam splitter makes these systems expensive to produce.

In view of the prior art limitations, what is needed is an optical heterodyne detection system that provides polarization independence, intensity noise suppression, and is economical to produce.

### SUMMARY OF THE INVENTION

The present invention provides a system for optical detection according to claim 1.

A system for optical detection includes a planar waveguide optical coupler that is directly adjacent to a polarizing beam splitter. The planar waveguide optical coupler combines an input signal with a local oscillator signal and the polarizing beam splitter divides the combined optical signal into orthogonally polarized beams. The orthogonally polarized beams are detected by first and second optical detectors. The planar waveguide optical coupler is directly adjacent to the polarizing beam splitter when no optical fibers or lenses are needed to transfer optical signals from the planar waveguide optical coupler to the polarizing beam splitter. In one embodiment, the planar waveguide optical coupler is in contact with the polarizing beam splitter, in another embodiment, the planar waveguide optical coupler is attached to the polarizing beam splitter, and in another embodiment, the planar waveguide optical coupler and the polarizing beam splitter are attached to opposite sides of a polarization rotator. Locating the planar waveguide directly adjacent to the polarizing beam splitter reduces birefringence and alignment problems associated with prior art systems. Larger alignment tolerances enable the optical detection system to be more efficiently fabricated.

The system according to the invention further includes a polarization rotator located between the planar waveguide optical coupler and the polarizing beam splitter.

An embodiment of a system for optical heterodyne detection includes a planar waveguide optical coupler, a polarizing beam splitter, and first and second optical detectors. The planar waveguide optical coupler combines an input signal and a local oscillator signal into a combined optical signal, with the planar waveguide optical coupler having a first output for outputting a first beam of the combined optical signal. The polarizing beam splitter is directly adjacent to the first output of the planar waveguide optical coupler and splits a beam based on its state of polarization. The polarizing beam splitter is optically connected to the first output of the planar waveguide optical coupler to receive the first beam. The polarizing beam splitter outputs two polarized portions of the first beam. The first and second optical detectors are optically connected to detect a different one of the two polarized portions of the first beam. The first and second optical detectors generate electrical signals in response to respective ones of the two polarized portions of the first beam.

In an embodiment, the polarizing beam splitter is in contact with the first output of the planar waveguide optical coupler.

In another embodiment, the polarizing beam splitter is attached to the planar waveguide optical coupler.

In an embodiment, the polarizing beam splitter is a walk-off crystal.

In an embodiment of the system, the planar waveguide optical coupler includes a second output for outputting a second beam of the combined optical, signal and the polarizing beam splitter is optically connected to the second output of the planar waveguide optical coupler to receive the second beam. The polarizing beam splitter outputs two polarized portions of the second beam. The system also includes third and fourth optical detectors that are optically connected to detect a different one of the two polarized portions of the second beam, the third and fourth optical detectors generating electrical signals in response to respective ones of the two polarized portions of the second beam.

In another embodiment, the system includes a processor for receiving the electrical signals from the optical detectors and for generating an output signal that is indicative of an optical parameter of the input signal, wherein the processor monitors a heterodyne beat signal that is a component of the combined optical signal.

In the optical system described above, if the local oscillator signal is swept across a range of frequencies, the optical detection system can serve as an optical spectrum analyzer. A system for optical spectrum analysis includes a planar waveguide optical coupler, a polarizing beam splitter, and first and second optical detectors. The planar waveguide optical coupler combines an input signal and a swept local oscillator signal into a combined optical signal, the planar waveguide optical coupler having a first output for outputting a first beam of the combined optical signal. The polarizing beam splitter is directly adjacent to the first output of the planar waveguide optical coupler and splits a beam based on its state of polarization. The polarizing beam splitter is optically connected to the first output of the planar waveguide optical coupler to receive the first beam. The polarizing beam splitter outputs two polarized portions of the first beam. The first and second optical detectors are optically connected to detect a different one of the two polarized portions of the first beam. The first and second optical detectors generate electrical signals in response to respective ones of the two polarized portions of the first beam.

In an embodiment of the optical spectrum analyzer, the polarizing beam splitter is in contact with the first output of the planar waveguide optical coupler.

In another embodiment of the optical spectrum analyzer, the polarizing beam splitter is attached to the planar waveguide optical coupler. In an embodiment, the polarizing beam splitter is bonded to the planar waveguide optical coupler.

In an embodiment of the optical spectrum analyzer, the polarizing beam splitter is a walk-off crystal.

In an embodiment of the optical spectrum analyzer, the planar waveguide optical coupler includes a second output for outputting a second beam of the combined optical signal and the polarizing beam splitter is optically connected to the second output of the planar waveguide optical coupler to receive the second beam, the polarizing beam splitter outputting two polarized portions of the second beam. The system also includes third and fourth optical detectors that are optically connected to detect a different one of the two polarized portions of the second beam. The third and fourth optical detectors generating electrical signals in response to respective ones of the two polarized portions of the second beam. An embodiment further includes a processor for receiving the electrical signals from the optical detectors and for generating an output signal that is indicative of an optical parameter of the input signal, wherein the processor monitors a heterodyne beat signal that is a component of the combined optical signal. Another embodiment includes a fiber holder that aligns first, second, third, and fourth fibers to the output points of the polarized portions of the first and second beams.

In an embodiment of the optical spectrum analyzer, a lens is located between the polarizing beam splitter and the first and second optical detectors for directing the two polarized portions of the first beam into first and second optical fibers that are optically connected to the first and second optical detectors.

In an embodiment of the optical spectrum analyzer, a tunable laser is optically connected to the planar waveguide optical coupler for generating the swept local oscillator signal.

In an embodiment a polarization rotator is located between the planar waveguide optical coupler and the polarizing beam splitter.

In an embodiment of the optical spectrum analyzer, an attenuator is connected to attenuate the input signal before the input signal reaches the planar waveguide optical coupler.

In an embodiment of the optical spectrum analyzer, a tunable optical filter connected to attenuate the input signal before the input signal reaches the planar waveguide optical coupler.

Other aspects and advantages of the present invention will become apparent from the following detailed description, taken in conjunction with the accompanying drawings, illustrating by way of example the principles of the invention.

### BRIEF DESCRIPTION OF THE DRAWINGS

Fig. 1 is a depiction of an optical heterodyne detection system in accordance with the prior art.
Fig. 2 is a depiction of an optical heterodyne detection system that includes a polarization diversity receiver, in accordance with the prior art.
Fig. 3 is a depiction of a heterodyne-based OSA with a planar waveguide optical coupler and an adjacent polarizing beam splitter in accordance with an embodiment of the invention.
Fig. 4 is a perspective view of the planar waveguide optical coupler and the adjacent polarizing beam splitter shown in Fig. 3.
Fig. 5 is a front view of a quadrant receiver that is used to detect the output optical signals from the system shown in Figs. 3 and 4.
Fig. 6 is a graphical depiction of the signal processing that is performed on the electrical signals that are generated from the quadrant receiver of Fig. 5.
Fig. 7 is a depiction of a heterodyne-based OSA with a planar waveguide optical coupler, a polarizing beam splitter, and a polarization rotator located between the planar waveguide optical coupler and the polarizing beam splitter in accordance with an embodiment of the invention.

### DETAILED DESCRIPTION OF THE INVENTION

An embodiment of the invention involves an optical spectrum analyzer in which a planar waveguide optical coupler is directly adjacent to a polarizing beam splitter. The planar waveguide optical coupler combines an input signal with a swept local oscillator signal and the polarizing beam splitter divides the combined optical signal into orthogonally polarized beams.

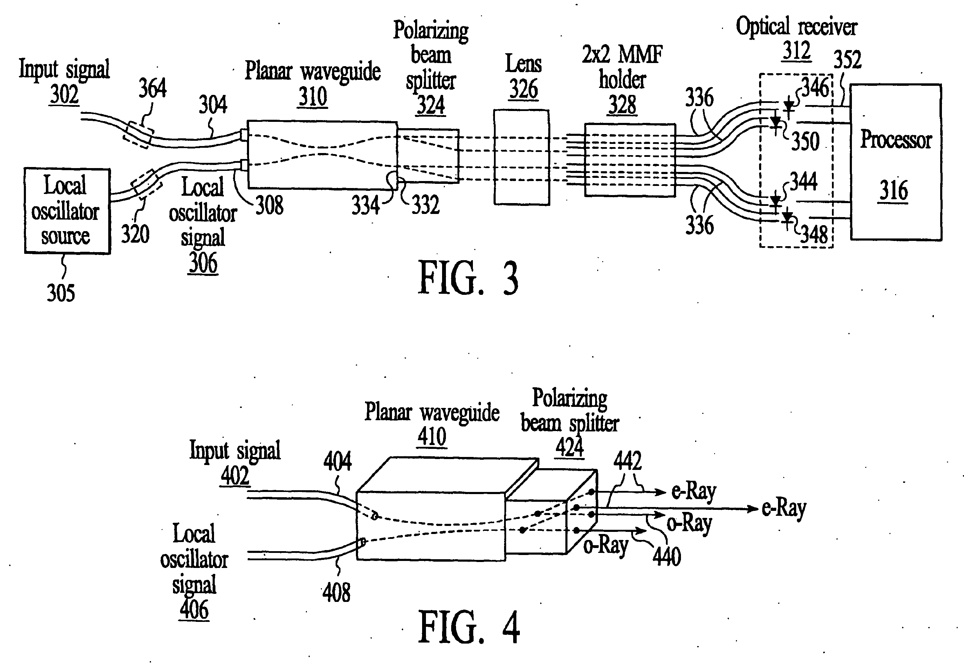

Fig. 3 is a depiction of a heterodyne-based optical spectrum analyzer in which a planar waveguide optical coupler is directly adjacent to a polarizing beam splitter. The optical spectrum analyzer includes a signal fiber 304, a local oscillator source 305, a local oscillator fiber 308, a planar waveguide optical coupler 310, a polarizing beam splitter 324, a lens 326, a fiber holder 328, a heterodyne receiver 312, and a processor 316. It should be noted that throughout the description, similar reference numerals are utilized to identify similar elements. Additionally, the term "optical" is not limited to the visible spectrum but includes other light spectrums, such as the infrared spectrum.

The signal fiber 304 carries an input signal that is to be detected by the system. In an embodiment, the signal fiber is a single mode optical fiber as is known in the field, although other optical waveguides may be utilized. In addition, although waveguides are described, optical signals may be input into the system, or transmitted within the system, in free space.

The input signal 302 includes optical signals that are generated from conventional devices as is known in the field of optical communications systems. For example, the input signal may be generated from a single laser or multiple lasers and may consist of a single wavelength or multiple wavelengths as is known in the field of wavelength division multiplexing. In addition to the wavelength characteristic, the input signal also has a polarization state that can be defined at any point in time. Although the polarization state of the input signal can be defined at any point in time, the polarization state of the input signal may be changing during signal transmission.

In an embodiment, the input signal 302 has unknown optical characteristics that are measured by the optical spectrum analyzer. The input signal may alternatively be an optical signal that is input with known optical characteristics, in which case the optical spectrum analyzer can be utilized for optical network analysis. In an embodiment, a known input signal may be a delayed portion of the local oscillator signal. When the optical spectrum analyzer is utilized for optical network or component analysis, the characteristics of a network or a single component can be determined by inputting a known input signal into the network or the single component and then measuring the response to the known signal.

The local oscillator source 305 generates a local oscillator signal. In an embodiment, the local oscillator source is a highly coherent wideband tunable laser that is tunable over a wavelength range of one nanometer or greater. During optical spectrum analysis, the local oscillator source generates a highly coherent local oscillator signal that is swept across a range of frequencies, or wavelengths, in order to detect the input signal over the range of frequencies or wavelengths. The local oscillator fiber 308 is an optical fiber, such as polarization maintaining optical fiber that carries the local oscillator signal 306 to the planar waveguide optical coupler 310. Other optical waveguides, or free space transmission, may be utilized in place of polarization maintaining optical fiber. Optical detection can alternatively be achieved without sweeping the local oscillator signal.

The planar waveguide coupler 310 combines the input signal 302 and the swept local oscillator signal 306 into a combined optical signal. Two portions of the combined optical signal are output from the planar waveguide optical coupler at an output face 332. Although the planar waveguide optical coupler shown in Fig. 3 has two outputs, a planar waveguide optical coupler with one or more outputs can be utilized to transmit a portion of the combined optical signal to the heterodyne receiver 312.

The polarizing beam splitter 324 is directly adjacent to the output face 332 of the planar waveguide optical coupler 310. The polarizing beam splitter receives the two beams of the combined optical signal directly from the planar waveguide optical coupler. Herein, two optical elements are "directly adjacent" when no optical elements, e.g., fibers, lenses, or mirrors, are needed to transfer optical signals from one element to the other. In an embodiment, the planar waveguide optical coupler and polarizing beam splitter are directly adjacent when no optical fibers or lenses are needed to make the optical connection. In an embodiment, the planar waveguide optical coupler and polarizing beam splitter are directly adjacent when an input face 334 of the polarizing beam splitter is in contact with the output face of the planar waveguide optical coupler 310. In another embodiment, the planar waveguide optical coupler and polarizing beam splitter are directly adjacent when the polarizing beam splitter is attached to the planar waveguide optical coupler. In an embodiment, attaching the planar waveguide optical coupler to the polarizing beam splitter involves adjusting the orientation of the polarizing beam splitter to generate four evenly spaced output beams and then bonding the two components together with a bonding material such as epoxy. The polarizing beam splitter 324 separates an incoming optical beam into two polarized beams. The polarizing beam splitter may include, for example, a birefringent crystal that provides polarization walk-off, such as a rutile walk-off crystal. As will be described below, the polarizing beam splitter separates each of the combined optical signal beams into two beams having different polarization states. Preferably, the polarizing beam splitter separates each of the incoming beams into two linearly polarized components that have orthogonal directions of polarization. Although the polarizing beam splitter is described as a single device, the polarizing beam splitter may include multiple beam splitters in configurations that accomplish the task of splitting an incoming beam based on beam polarization.

Because the planar waveguide optical coupler 310 is directly adjacent to the polarizing beam splitter 324, the birefringence problems of fiber couplers and the alignment problems of polarizing beam splitter are avoided. Additionally, the large alignment tolerances allowed by placing the polarizing beam splitter directly adjacent to the planar waveguide optical coupler enables the use of cost effective fabrication processes.

Fig. 4 is a perspective view of the planar waveguide optical coupler 410 and the polarizing beam splitter 424 that are shown in Fig. 3. Fig. 4 shows how the two beams of the combined optical signal are split into two differently polarized beams. As shown in Fig. 4, the bottom beams 440 follow an "ordinary" path and are referred to as the ordinary beams. The top beams 442 walks off in an "extraordinary" path and are referred to as the extraordinary beams.

In an embodiment, the polarization of the local oscillator signal is controlled such that the power of the local oscillator signal is distributed approximately evenly among the four photodetectors of the optical receiver 312.

- Referring back to Fig. 3, four beams are output from the polarizing beam splitter 324. In the embodiment of Fig. 3, the four beams are output to a lens, such as a gradient index (GRIN) lens, which refract light due to variations of their index of refraction. The lens focuses the four beams and directs each one of the four beams into a separate one of four optical fibers 336 that are held in place with a two-by-two fiber holder 328. The four optical fibers guide the four separate output beams to the optical receiver. In the embodiment of Fig. 3, the two-by-two fiber holder is sized such that it aligns the fibers with the exit points of the four beams from the polarizing beam splitter 324. In an alternative embodiment, the length of the polarizing beam splitter is chosen such that the spacing between the four output beams matches the spacing of the fibers within the fiber holder.

The optical receiver 312 includes four independent photodetectors 344, 346, 348, and 350 that are aligned to separately detect the four polarized beams that are output from the polarizing beam splitter 324. In an embodiment, the four independent photodetectors are coupled or "pigtailed" to the four optical fibers 336. The four independent photodetectors can be combined into a single quadrant receiver for packaging reasons, however, the four independent photodetectors could alternatively be, for example, four photodetectors that are physically separate. Although not shown, the receiver may include signal amplifiers and filters, as is known in the field.

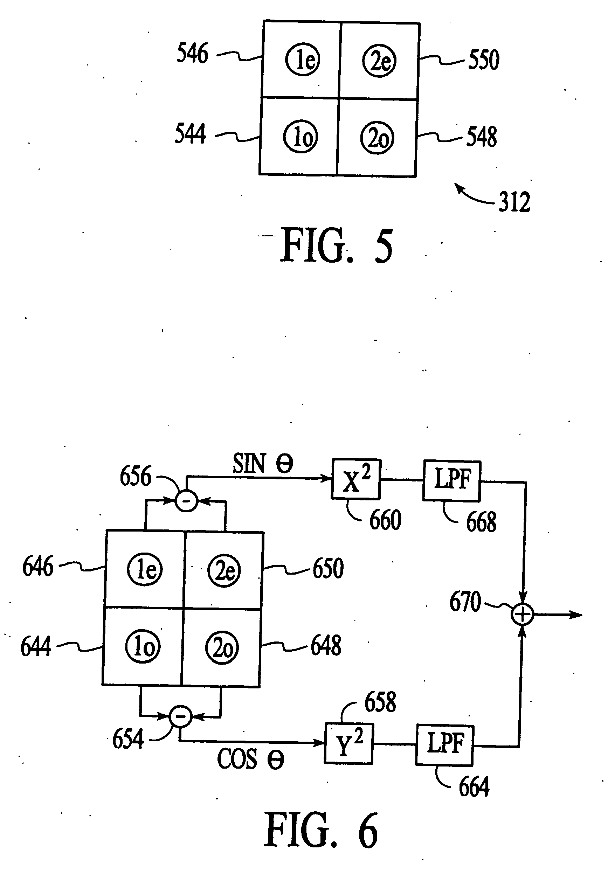

Fig. 5 is a front view of an embodiment of a quadrant receiver that includes four photodetectors 544, 546, 548, 550. As shown in Fig. 5, the two left photodetectors 544 and 546 of the receiver are partially identified by "1," which corresponds to the beam (beam 1) that is one of the two beams that are output from planar waveguide optical coupler 310. The two right photodetectors 548 and 550 are partially identified by the number "2," which corresponds to the beam (beam 2) that is the other one of the two beams that are output from the optical coupler. The two bottom photodetectors 544 and 548 are partially identified by the letter "o," which corresponds to the ordinary beams exiting from the polarizing beam splitter. The two top photodetectors 546 and 550 are partially identified by the letter "e," which corresponds to the extraordinary beams exiting from the polarizing beam splitter. Under this convention, the four beams and the respective photodetectors are identified as "1o," "1e," "2o," and "2e."

Referring back to Fig. 3, the electrical signals generated by each of the four photodetectors in the optical receiver 312 are individually provided to the processor 316. The four connections between the optical receiver and the processor are depicted in Fig. 3 by four lines 352.

The processor 316 includes a multifunction processor that receives the electrical signals from the heterodyne receiver 312 and isolates the heterodyne beat signal from the heterodyne receiver to generate an output signal that is indicative of an optical parameter, such as optical frequency, wavelength, or amplitude, of the input signal 302. The processor may include either or both analog signal processing circuitry and digital signal processing circuitry, as is known in the field of electrical signal processing. In an embodiment, an analog signal from the receiver is converted into a digital signal and the digital signal is subsequently processed to generate an output signal.

Operation of the system described with reference to Figs. 3 - 5 involves combining an input signal and a swept local oscillator signal in the planar waveguide optical coupler 310. The combined optical signal is then split into two beams that each include a portion of the input signal and the local oscillator signal. The two beams exit the planar waveguide optical coupler and immediately enter the adjacent polarizing beam splitter 324. Each of the two beams containing the combined optical signal is then split by the polarizing beam splitter into two polarized beams having orthogonal polarization states. The four polarized beams exit the polarizing beam splitter and enter the lens 326. The lens focuses the four polarized beams and directs the beams into the beam-specific fibers 336. The four beam-specific fibers direct the four polarized beams to the optical receiver 312 and each of the four photodetectors within the receiver generates electrical signals in proportion to the intensity of the optical beams that are detected. The electrical signals generated by the four photodetectors are then received by the processor 316 and processed in a manner that isolates and maximizes the heterodyne term of the combined optical signal. Processing of the electrical signals involves providing intensity noise suppression and polarization diversity. As is described below, the system may require an initial calibration operation in order to provide accurate results.

Fig. 6 is an example graphical depiction of how the electrical signals generated from the four photodetectors 644, 646, 648, and 650 of a quadrant receiver are processed to achieve intensity noise suppression and polarization diversity. As described above, the signal processing preferably involves digital signal processing although this is not critical. Initially, signal subtractions are performed between the "1o" signal and the "2o" signal, and between the "1e" signal and the "2e" signal. The subtraction functions are represented by subtraction units 654 and 656, respectively. The subtraction functions are performed to provide intensity noise suppression by canceling out the intensity noise components of the optical signals that are received by each photodetector. The subtraction functions cancel out the intensity noise because the intensity noise is common between each signal. That is, the amplitudes of the "1e" and "2e" signals fluctuate in a synchronized manner and by the same percentage relative to each other, and the "1o" and "2o" signals fluctuate in a synchronized manner and by the same percentage relative to each other.

Additional signal processing is implemented on the subtracted signals to provide polarization diversity. Because the combined optical signal beams are split into orthogonal states of polarization, one of the beams is proportional to cosθ and the other beam is proportional to sinθ, where θ is the angle of polarization of the input signal with respect to the ordinary axis of the polarizer. In the example of Fig. 6, the electrical signals generated from the ordinary beam portions include a cosθ term and the electrical signals generated from the extraordinary beam portions include a sinθ term. The cosθ term is squared, as represented by squaring unit 658, and the sinθ term is squared, as represented by squaring unit 660. The squaring units generate output signals that are proportional to the square of the input signals. The output signals from the squaring units are each connected to low pass filtering units 664 and 668. The low pass filtering units provide low pass filtering on the squared output signals. The output signals from the low pass filtering units are each connected to an input terminal of an adder unit, designated 670, which produces a readout signal that is proportional to the sum of the signals from the low pass filtering units. Squaring the cosθ term and the sinθ term, low pass filtering the terms, and then adding the squared and filtered cosθ term to the squared and filtered sinθ term provides a result that is independent of the angle of polarization (θ) of the input signal and therefore polarization diverse. It should be understood that in a digital system the subtracting, squaring, low pass filtering, and adding units may be incorporated into a multifunction processor.

The combination of the planar waveguide optical coupler 310, the polarizing beam splitter 324, the optical receiver 312, the processor 316, and the signal processing units 654, 656, 658, 660, 664, 668, and 670 creates a system that is insensitive to the polarization state of the input signal and that suppresses the intensity noise of the split beams that are detected by the four photodetectors. In an embodiment, a switch 364 is utilized to selectively block transmission of the input signal in order to calibrate the system. For example, while the input signal is switched off, the coupling coefficient of the planar waveguide optical coupler 310 can be determined as a function of wavelength by sweeping the local oscillator signal across a range of wavelengths. In addition, the responsivity of the photodetectors can be determined as a function of wavelength by sweeping the local oscillator signal while the input signal is switched off.

Further, the distribution of the local oscillator signal onto the photodetectors can be determined as a function of wavelength by sweeping the local oscillator signal while the input signal is switched off. It is preferable that the local oscillator signal is approximately evenly distributed among the four photodetectors of the receiver to achieve good polarization diversity. If the local oscillator signal is not evenly distributed among the four photodetectors, then the power distribution of the local oscillator signal may be adjusted utilizing the polarization controller 320. In an embodiment, the polarization controller may include a half-wave plate.

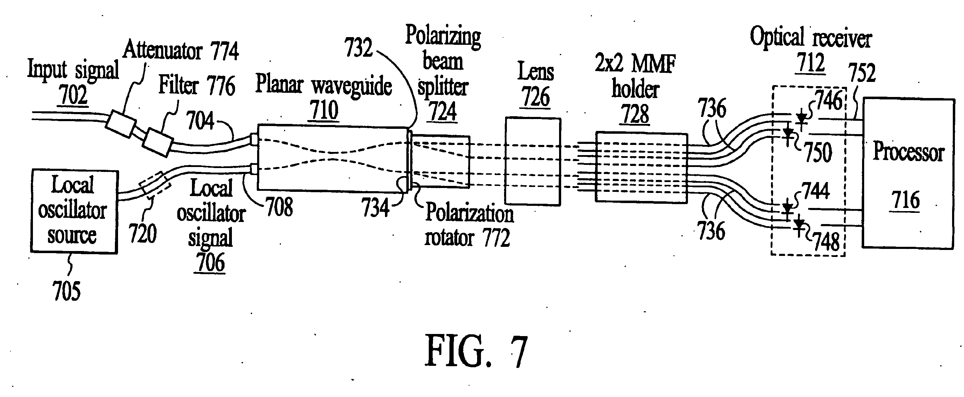

Fig. 7 depicts an alternative embodiment of the heterodyne-based OSA described above that includes a polarization rotator 772 located between the planar waveguide optical coupler 710 and the polarizing beam splitter 724. In the embodiment of Fig. 7, the planar waveguide optical coupler and polarizing beam splitter are maintained directly adjacent to each other even though they are separated by the polarization rotator. In an embodiment, the polarization rotator is a quarter wave plate. The polarization rotator is added to adjust the power distribution of the local oscillator signal

The heterodyne-based OSA of Fig. 7 also includes an optional attenuator and an optional optical filter. The optional attenuator 774 is integrated into the input fiber 704 in order to attenuate the input signal 702. Attenuating the input signal reduces the intensity noise that is generated by the input signal during detection by the heterodyne receiver 712. The particular type of attenuator is not critical and therefore various types of attenuators, as are known in the field of optical attenuation, may be utilized. Preferably, the attenuator is adjustable such that the level of attenuation can be varied as needed to control the intensity of the input signal that is passed to the planar waveguide optical coupler 710. In an embodiment, the attenuator can be adjusted to completely block transmission of the input signal. Completely blocking transmission of the input signal can be useful during system calibration.

The optional optical filter 776 is a tunable bandpass filter that is tuned to track the swept local oscillator signal 706. That is, the optical filter is tuned so that the optical filter has the highest optical transmission over a frequency band that corresponds to the frequency of the swept local oscillator signal. The optical filter may be tuned to track the swept local oscillator signal utilizing known frequency tracking techniques. In an embodiment, the center of the filter passband is tuned to the frequency of the swept local oscillator signal. In another embodiment, the center of the filter passband is tuned slightly off the local oscillator frequency in order to generate the heterodyne signal at a higher frequency, for example, when image rejection is important. Tunable optical filters are well known in the field of optical communications and can be implemented utilizing components such as diffraction gratings, dielectric interference filters, periodic Bragg devices, such as tunable fiber Bragg gratings, Fabry-Perot interferometers, and other known interferometers.

Although specific embodiments of the invention have been described and illustrated, the invention is not limited to the specific forms and arrangements of parts so described and illustrated. The invention is limited only by the claims.

## Claims

1. A system for optical detection comprising:
a planar waveguide optical coupler (310; 710) for combining an input signal and a local oscillator signal into a combined optical signal, said planar waveguide optical coupler having a first output for outputting a first beam of said combined optical signal;
a polarization rotator (772) directly adjacent to said first output of said planar waveguide optical coupler (310; 710);
a polarizing beam splitter (324; 724) directly adjacent to said first output of said planar waveguide optical coupler for splitting a beam based on its state of polarization, said polarizing beam splitter being optically connected to said first output of said planar waveguide optical coupler to receive said first beam, said polarizing beam splitter outputting two polarized portions of said first beam; and
first and second optical detectors (346, 350; 746, 750) that are optically connected to detect a different one of said two polarized portions of said first beam, said first and second optical detectors generating electrical signals in response to respective ones of said two polarized portions of said first beam;
wherein said polarization rotator (772) is located between said planar waveguide optical coupler (710) and said polarizing beam splitter (724).

2. The system of claim 1 wherein said polarizing beam splitter (324; 724) is attached to said planar waveguide optical coupler (310; 710) through said polarization rotator (772).

3. The system of one of the preceding claims wherein said polarizing beam splitter (324; 724) is a walk-off crystal.

4. The system of one of the preceding claims wherein:
said planar waveguide optical coupler (310; 710) includes a second output for outputting a second beam of said combined optical signal:
said polarizing beam splitter (324; 724) being optically connected to said second output of said planar waveguide optical coupler to receive said second beam, said polarizing beam splitter outputting two polarized portions of said second beam; and
third and fourth optical detectors (344, 348; 744, 748) optically connected to detect a different one of said two polarized portions of said second beam, said third and fourth optical detectors generating electrical signals in response to respective ones of said two polarized portions of said second beam.

5. The system of claim 4 further including a processor (316) for receiving said electrical signals from said optical detectors (344, 346, 348, 350; 744, 746, 748, 750) and for generating an output signal that is indicative of an optical parameter of said input signal, wherein said processor monitors a heterodyne beat signal that is a component of said combined optical signal.

6. The system of claim 4 or 5 further including a fiber holder (328; 728) that aligns first, second, third, and fourth fibers (336; 736) to the output points of said polarized portions of said first and second beams.

7. The system of one of the preceding claims further including a lens (326; 726) located between said polarizing beam splitter (324; 724) and said first and second optical detectors (346, 350; 746, 750) for directing said two polarized portions of said first beam into first and second optical fibers that are optically connected to said first and second optical detectors.

8. The system of one of the preceding claims further including a tunable laser (305; 705) optically connected to said planar waveguide optical coupler (310; 710) for generating said local oscillator signal.

## Patentansprüche

1. System zur optischen Detektion, umfassend:
einen optischen Koppler (310; 710) für planare Wellenleiter zur Kombination eines Eingangssignals und eines Signals eines lokalen Oszillators zu einem kombinierten optischen Signal, wobei der optische Koppler für planare Wellenleiter einen ersten Ausgang zur Ausgabe eines ersten Strahls des kombinierten optischen Signals aufweist;
einen Polarisationsdreher (772) unmittelbar neben dem ersten Ausgang des optischen Kopplers (310; 710) für planare Wellenleiter;
einen polarisierenden Strahlteiler (324; 724) unmittelbar neben dem ersten Ausgang des optischen Kopplers für planare Wellenleiter zum Teilen eines Strahls basierend auf seinem Polarisationszustand, wobei der polarisierende Strahlteiler optisch mit dem ersten Ausgang des optischen Kopplers für planare Wellenleiter verbunden ist, um den ersten Strahl zu empfangen, und der polarisierende Strahlteiler zwei polarisierte Teile des ersten Strahls ausgibt; und
einen ersten und einen zweiten optischen Detektor (346, 350; 746, 750), die optisch verbunden sind, um einen anderen der beiden polarisierten Teile des ersten Strahls zu erfassen, wobei der erste und zweite optische Detektor elektrische Signale in Reaktion auf jeweilige der beiden polarisierten Teile des ersten Strahls erzeugen;
wobei der Polarisationsdreher (772) zwischen dem optischen Koppler (710) für planare Wellenleiter und dem polarisierenden Strahlteiler (724) angeordnet ist.

2. System nach Anspruch 1, wobei der polarisierende Strahlteiler (324; 724) am optischen Koppler (310; 710) für planare Wellenleiter durch den Polarisationsdreher (772) befestigt ist.

3. System nach einem der vorhergehenden Ansprüche, wobei der polarisierende Strahlteiler (324; 724) ein Walk-Off-Kristall ist.

4. System nach einem der vorhergehenden Ansprüche, wobei:
der optische Koppler (310; 710) für planare Wellenleiter einen zweiten Ausgang zur Ausgabe eines zweiten Strahls des kombinierten optischen Signals umfaßt;
der polarisierende Strahlteiler (324; 724) optisch mit dem zweiten Ausgang des optischen Kopplers für planare Wellenleiter zum Empfang des zweiten Strahls verbunden ist, der polarisierende Strahlteiler zwei polarisierte Teile des zweiten Strahls ausgibt; und
ein dritter und vierter optischer Detektor (344, 348; 744, 748) optisch verbunden sind, um einen anderen der beiden polarisierten Teile des zweiten Strahls zu erfassen, wobei der dritte und vierte optische Detektor elektrische Signale in Reaktion auf jeweilige der beiden polarisierten Teile des zweiten Strahls erzeugen.

5. System nach Anspruch 4, das des weiteren einen Prozessor (316) zum Empfang der elektrischen Signale von den optischen Detektoren (344, 346, 348, 350; 744, 746, 748, 750) und zum Erzeugen eines Ausgangssignals umfaßt, das für einen optischen Parameter des Eingangssignals kennzeichnend ist, wobei der Prozessor ein heterodynes Schwebungssignal überwacht, das eine Komponente des kombinierten optischen Signals ist.

6. System nach Anspruch 4 oder 5, das des weiteren einen Faserhalter (328; 728) umfaßt, mit dem die erste, zweite, dritte und vierte Faser (336; 736) mit den Ausgangspunkten der polarisierten Teile des ersten und zweiten Strahls ausgerichtet sind.

7. System nach einem der vorhergehenden Ansprüche, das des weiteren eine Linse (326; 726) umfaßt, die sich zwischen dem polarisierenden Strahlteiler (324; 724) und dem ersten und zweiten optischen Detektor (346, 350; 746, 750) befindet, um die beiden polarisierten Teile des ersten Strahls in eine erste und zweite optische Faser zu richten, die optisch mit dem ersten und zweiten optischen Detektor verbunden sind.

8. System nach einem der vorhergehenden Ansprüche, das des weiteren einen abstimmbaren Laser (305; 705) umfaßt, der zur Erzeugung des Signals des lokalen Oszillators optisch mit dem optischen Koppler (310; 710) für planare Wellenleiter verbunden ist.

## Revendications

1. Système destiné à la détection optique, comprenant :
un coupleur optique (310 ; 710) à guide d'ondes planes, destiné à combiner un signal d'entrée et un signal d'oscillateur local en un signal optique combiné, ledit coupleur optique à guide d'ondes planes ayant une première sortie destinée à envoyer un premier faisceau dudit signal optique combiné ;
un rotateur de polarisation (772) directement adjacent à ladite première sortie dudit coupleur optique (310 ; 710) à guide d'ondes planes ;
un séparateur polarisant de faisceau (324 ; 724), directement adjacent à ladite première sortie dudit coupleur optique à guide d'ondes planes, destiné à séparer un faisceau sur la base de son état de polarisation, ledit séparateur polarisant de faisceau étant optiquement connecté à ladite première sortie dudit coupleur optique à guide d'ondes planes de manière à recevoir ledit premier faisceau, ledit séparateur polarisant de faisceau envoyant deux portions polarisées dudit premier faisceau ; et
un premier et un deuxième détecteurs optiques (346, 350 ; 746, 750) qui sont optiquement connectés de manière à détecter une portion différente desdites deux portions polarisées dudit premier faisceau, lesdits premier et deuxième détecteurs optiques produisant des signaux électriques en réponse à des portions respectives desdites deux portions polarisées dudit premier faisceau ;
dans lequel ledit rotateur de polarisation (772) est localisé entre ledit coupleur optique (710) à guide d'ondes planes et ledit séparateur polarisant de faisceau (724).

2. Système selon la revendication 1, dans lequel ledit séparateur polarisant de faisceau (324 ; 724) est attaché audit coupleur optique (310 ; 710) à guide d'ondes planes à travers ledit rotateur de polarisation (772).

3. Système selon l'une quelconque des revendications précédentes, dans lequel ledit séparateur polarisant de faisceau (324 ; 724) est un cristal de walk-off.

4. Système selon l'une quelconque des revendications précédentes, dans lequel :
ledit coupleur optique (310 ; 710) à guide d'ondes planes inclut une deuxième sortie destinée à envoyer un deuxième faisceau dudit signal optique combiné ;
ledit séparateur polarisant de faisceau (324 ; 724) est optiquement connecté à ladite deuxième sortie dudit coupleur optique à guide d'ondes planes de manière à recevoir ledit deuxième faisceau, ledit séparateur polarisant de faisceau envoyant deux portions polarisées dudit deuxième faisceau ; et
un troisième et un quatrième détecteurs optiques (344, 348 ; 744, 748) sont optiquement connectés de manière à détecter une portion différente desdites deux portions polarisées dudit deuxième faisceau, lesdits troisième et quatrième détecteurs optiques produisant des signaux électriques en réponse à des portions respectives desdites deux portions polarisées dudit deuxième faisceau.

5. Système selon la revendication 4, comprenant en outre un processeur (316) destiné à recevoir lesdits signaux électriques depuis lesdits détecteurs optiques (344, 346, 348, 350 ; 744, 746, 748, 750) et à produire un signal de sortie qui est indicateur d'un paramètre optique dudit signal d'entrée, dans lequel ledit processeur surveille un signal de battement hétérodyne qui est une composante dudit signal optique combiné.

6. Système selon la revendication 4 ou 5, comprenant en outre un support pour fibres (328 ; 728) qui aligne la première, la deuxième, la troisième et la quatrième fibres (336 ; 736) aux points de sortie desdites portions polarisées desdits premier et deuxième faisceaux.

7. Système selon l'une quelconque des revendications précédentes, comprenant en outre une lentille (326 ; 726) localisée entre ledit séparateur polarisant de faisceau (324 ; 724) et lesdits premier et deuxième détecteurs optiques (346, 350 ; 746, 750), destinée à diriger lesdites deux portions polarisées dudit premier faisceau vers l'intérieur d'une première et d'une deuxième fibres optiques qui sont optiquement connectées auxdits premier et deuxième détecteurs optiques.

8. Système selon l'une quelconque des revendications précédentes, comprenant en outre un laser accordable (305 ; 705), optiquement connecté audit coupleur optique à guide d'ondes planes (310 ; 710), destiné à produire ledit signal d'oscillateur local.
